# FASCICULE DE BREVET EUROPEEN

(11) **EP 3 008 763 B1**
(45) Date de publication et mention de la délivrance du brevet: **05.04.2017**
(21) Numéro de dépôt: 14730522.1
(22) Date de dépôt: 13.06.2014
(51) Int. Cl.: H01M 2/02, H01M 2/10, H01M 2/20, H01M 2/30, H01M 10/48, H01M 10/42, H01M 10/6563

(54) **BATTERIE COMPOSÉE D'UN ASSEMBLAGE EN CHAÎNE DE MODULES**
BATTERIE AUS EINER KETTENANORDNUNG AUS MODULEN
BATTERY MADE UP OF A CHAIN ASSEMBLY OF MODULES

(30) Priorité: 13.06.2013 FR 1355501
(43) Date de publication de la demande: 20.04.2016
(73) Titulaire: Commissariat à l'Énergie Atomique et aux Énergies Alternatives, 75015 Paris (FR)
(72) Inventeur: DESPESSE, Ghislain, F-38340 Voreppe (FR)
(74) Mandataire: Novaimo
(86) Numéro de dépôt international: PCT/EP2014/062435
(87) Numéro de publication internationale: WO 2014/198929

(56) Documents cités:
- WO-A1-2007/100140
- WO-A1-2009/121062
- US-A1- 2011 273 132

## Description

L'invention concerne un module de batterie ou d'un élément générateur d'électricité. Elle concerne aussi une batterie en tant que telle ou un générateur d'électricité en tant que tel comprenant plusieurs modules. Elle concerne aussi un procédé de montage d'une telle batterie ou générateur d'électricité et un procédé de gestion d'une telle batterie ou générateur d'électricité.

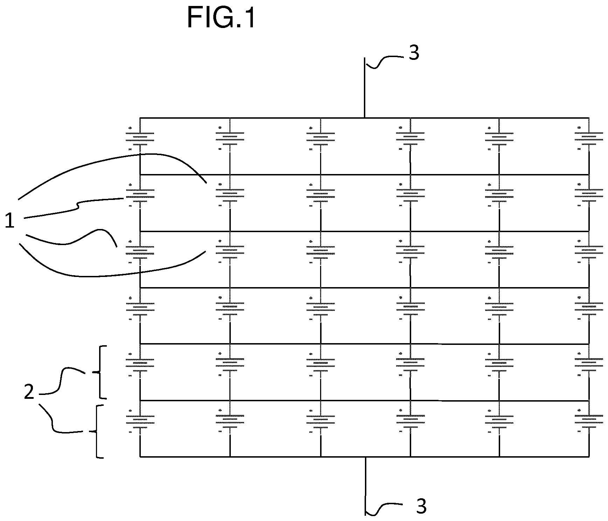

La figure 1 représente une batterie selon l'état de la technique, aussi appelée « pack batterie ». Un tel pack batterie, que nous appellerons simplement batterie par la suite, est composé d'une multitude de batteries élémentaires. Une batterie élémentaire, souvent appelée simplement cellule, comprend une partie active qui participe directement à la fonction de stockage et restitution d'énergie électrique, qui peut être par exemple être de nature chimique. Cette partie active est disposée dans un boîtier dont une première face externe forme la borne positive ou premier collecteur de courant de la cellule et une seconde face externe forme la borne négative ou second collecteur de courant. La batterie, représentée schématiquement sur la figure 1, comprend une architecture classique de plusieurs étages ou modules 2, disposés en série, et chaque module comprend plusieurs cellules 1 disposées en parallèle. Les deux modules disposés aux extrémités de l'assemblage forment chacun respectivement une borne 3 pour la liaison de la batterie avec l'extérieur, pour alimenter un dispositif extérieur par exemple ou pour la recharge de la batterie.

Selon une première réalisation de l'état de la technique, la réalisation pratique d'une telle batterie se fait en reliant électriquement les différents modules 2 par des fils électriques et des connecteurs, ou par des câbles électriques soudés ou vissés de modules en modules. Naturellement, une telle réalisation est complexe à fabriquer, peu fiable car la multiplication des liaisons électriques intermédiaires augmente le risque de défaillance, et est peu flexible puisque l'architecture de la batterie est difficilement modifiable lorsqu'elle est finalisée.

Selon une seconde réalisation améliorée de l'état de la technique, les modules de la batterie se présentent sous la forme de différents boîtiers indépendants, mécaniquement fixés et connectés électriquement entre eux de manière amovible par l'intermédiaire d'un bâti, aussi appelé rack. Dans leur position au sein du bâti, les boîtiers sont connectés les uns avec les autres par un bus de puissance agencé au sein du rack, et peuvent transmettre une tension à des bornes de sortie, de même agencées sur le rack. Naturellement, le rack est dimensionné initialement en fonction du nombre de modules maximum qu'une utilisation est susceptible d'exiger. Par la suite, même en cas de besoin inférieur, le rack conserve donc le même encombrement. Cette solution conserve ainsi l'inconvénient de nécessiter un bâti d'encombrement important et invariable.

WO2009121062 décrit un système à cellules solaires ayant des inter-connections pour des liaisons électriques de puissance reliées aux cellules ainsi qu'un interrupteur apte a modifier la liaison électrique entre plusieurs cellules.

Les constatations précédentes s'appliquent aussi plus généralement à un élément générateur d'électricité, par exemple composé de cellules photovoltaïques ou de piles à combustible, qui peut présenter une architecture modulaire similaire à celle de la batterie et se heurter aux mêmes problématiques techniques. Ainsi, nous emploierons le terme de transmission d'énergie pour englober à la fois les éléments de stockage d'énergie comme les batteries, et les éléments générateurs d'énergie, comme les dispositifs photovoltaïques.

Ainsi, il existe un besoin d'une solution améliorée de transmission d'énergie permettant de résoudre au moins une partie des inconvénients des solutions existantes, et l'invention cherche à atteindre tout ou partie des objets suivants.

Un premier objet de l'invention est de proposer une solution de transmission d'énergie qui permet de garantir un fonctionnement fiable et allongé dans le temps.

Un second objet de l'invention est de proposer une solution de transmission d'énergie qui s'adapte facilement à différentes exigences d'utilisation, flexible et conviviale.

Un troisième objet de l'invention est de proposer une solution de transmission d'énergie d'encombrement minimum.

A cet effet, l'invention repose sur un dispositif de transmission d'énergie, notamment batterie ou dispositif générateur d'énergie caractérisé en ce qu'il comprend :
- au moins un module agencé au sein d'une enveloppe, comprenant plusieurs liaisons électriques de puissance indépendantes et plusieurs blocs comprenant chacun :
   - au moins une première liaison électrique de puissance reliée à une paire de connecteurs, et
   - plusieurs cellules liées électriquement à cette première liaison électrique de puissance, permettant de connecter ces cellules avec des composants externes au module par l'intermédiaire de la paire de connecteurs, et
   - la paire de connecteurs, agencée sur l'enveloppe du module, de sorte à être apte à une connexion électrique avec un connecteur électrique d'un second module qui comprendrait une même paire de connecteurs,
   - des interrupteurs aptes à modifier la liaison électrique entre plusieurs cellules du bloc, permettant notamment de relier deux cellules en série ou de shunter une ou plusieurs cellule(s), pour pouvoir varier la tension entre la paire de connecteurs,
- plusieurs connecteurs de sortie permettant une liaison électrique multi-phases, notamment triphasée, du dispositif de transmission d'énergie avec un composant extérieur, chaque connecteur de sortie étant relié électriquement à au moins une liaison électrique de puissance d'un bloc d'un ou de plusieurs modules du dispositif de transmission d'énergie.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'une batterie selon un état de la technique.
La figure 2 représente schématiquement un module de batterie selon un mode de réalisation de l'invention.
La figure 3 représente schématiquement un bloc du module de batterie selon le mode de réalisation de l'invention.
La figure 4 représente schématiquement une batterie selon un premier mode de réalisation de l'invention.
La figure 5 représente schématiquement un support d'accueil d'une batterie selon un mode de réalisation de l'invention.
La figure 6 représente schématiquement une batterie selon un second mode de réalisation de l'invention.
La figure 7 représente schématiquement une batterie selon un troisième mode de réalisation de l'invention.
La figure 8 représente schématiquement une batterie présentant une forme différente en variante des modes de réalisation de l'invention.
La figure 9 représente schématiquement une batterie selon une variante des modes de réalisation de l'invention.
La figure 10 représente schématiquement la batterie selon la variante précédente des modes de réalisation de l'invention dans une configuration non parfaitement assemblée.

Dans les figures suivantes, les mêmes références seront utilisées pour des éléments identiques ou similaires dans chaque mode de réalisation de l'invention, pour une raison de simplification de la description.

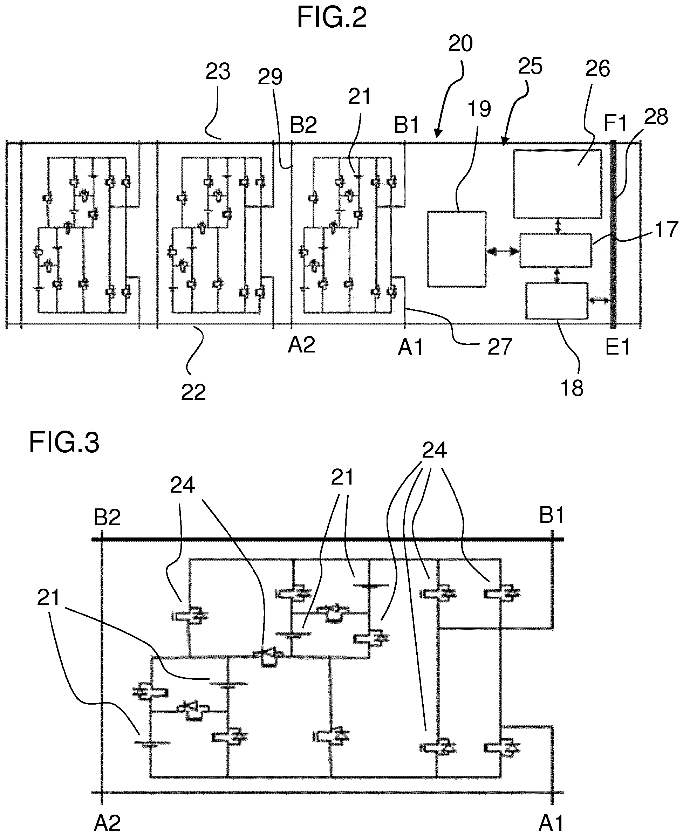

La figure 2 représente schématiquement un module 20 de batterie selon un mode de réalisation de l'invention. Ce module 20 se présente comme une entité physique monolithique, dissociable du reste de la batterie. Dans ce mode de réalisation, il présente une forme parallélépipédique. Il comprend une enveloppe (ou boîtier) 25 extérieure, comprenant deux surfaces 22, 23, planes que nous qualifierons de surfaces inférieure 22 et surface supérieure 23 par convention en rapport avec l'utilisation par assemblage vertical d'un tel module, comme cela apparaîtra par la suite. Des connecteurs sont prévus, aménagés au niveau de l'enveloppe 25 extérieure du module, pour l'assemblage du module 20 avec d'autres composants pour former une batterie.

A l'intérieur de l'enveloppe 25, le module 20 comprend trois blocs formant trois ensembles actifs indépendants.

Chaque bloc, plus particulièrement représenté par la figure 3, comprend plusieurs cellules 21, agencées sur une première liaison électrique 27 de puissance s'étendant entre un premier connecteur A1 inférieur disposé au niveau de la surface inférieure 22 du module 20 et un premier connecteur B1 supérieur disposé au niveau de la surface supérieure 23 du module 20. Plus précisément, il apparaît que la partie active formée par un bloc d'un module 20 comprend quatre cellules 21, et plusieurs interrupteurs 24 sous forme de transistors, qui permettent de modifier la liaison électrique, notamment série et/ou parallèle, entre les différentes cellules 21. Par exemple, les différentes configurations électriques suivantes sont possibles selon le mode de réalisation illustré, selon le positionnement ouvert et/ou fermé des interrupteurs représentés :
- positionnement des quatre cellules en parallèle ;
- positionnement des quatre cellules en série ;
- positionnement en série de deux blocs de deux cellules disposées en parallèle ;
- disposition en série de deux cellules et d'un bloc comprenant deux cellules en parallèle ;
- inversion ou non de la tension de sortie ;
- application d'une tension de sortie du module nulle.

Si on appelle v la tension d'une cellule, les différentes configurations listées ci-dessus permettent d'obtenir une tension de sortie du module, entre les connecteurs A1 et B1, variant entre -4v et +4v, par pas de v. En variante, tout autre agencement de cellules et d'interrupteurs peut naturellement être prévu au sein d'un module. On peut par exemple avoir une position tout ouvert pour isoler électriquement toutes les cellules. Il apparaît notamment immédiatement que cette construction présente l'avantage de permettre l'obtention d'une puissance variable entre les bornes A1 et B1, alors que chaque cellule fournit une tension continue, ce qui sera notamment exploité pour la génération de signaux de type sinusoïde, comme cela sera détaillé par la suite.

Le bloc comprend enfin une seconde liaison électrique 29 entre des seconds connecteurs A2, B2, respectivement agencés respectivement au niveau de la surface inférieure 22 du module 20 et au niveau de la surface supérieure 23 du module 20. Cette seconde liaison électrique 29 est une simple liaison électrique totalement indépendante des cellules, dont la fonction sera exposée par la suite.

D'autre part, dans ce mode de réalisation, chaque module 20 intègre aussi un pilote d'interrupteurs, non représenté, une unité de gestion 17 comprenant par exemple un calculateur, au moins un capteur 26 de mesure, un élément 18 formant isolation galvanique. En remarque, l'alimentation électrique de ces composants peut être organisée comme mentionné précédemment, ou même directement à partir d'au moins une des cellules du module concerné. Un pilote 19 de gestion d'énergie s'occupe de gérer l'énergie interne des différents composants du module.

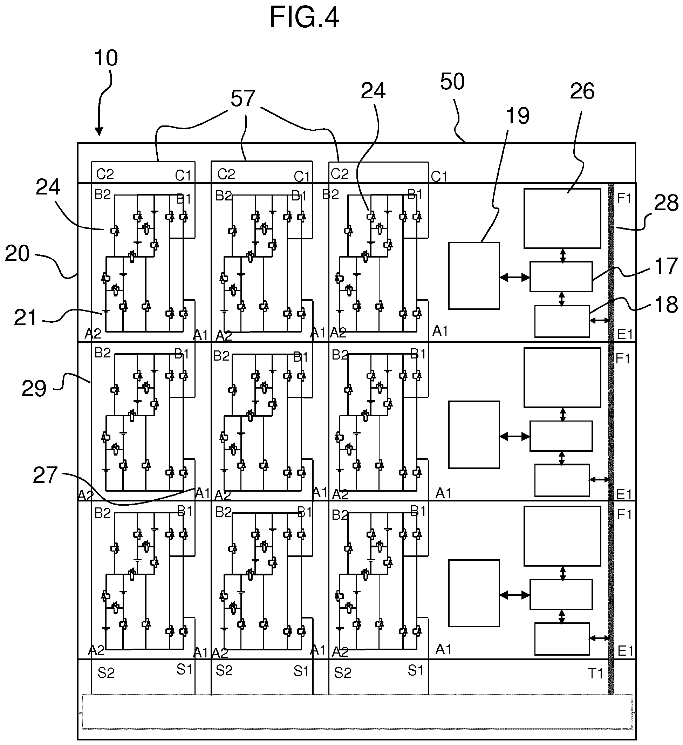

La figure 4 représente un mode de réalisation d'une batterie 10, formée notamment à partir de plusieurs modules 20 similaires à celui décrit précédemment, et à l'aide d'un support d'accueil 30 et d'un capuchon de fermeture 50 qui seront détaillés par la suite. Dans cette réalisation, la batterie comprend trois modules 20 assemblés verticalement en chaine les uns sur les autres, au-dessus du support d'accueil 30, qui supporte le premier module 20 de l'assemblage. En remarque, ces différents modules pourraient différer par l'organisation de leurs cellules 21.

Comme cela apparaît clairement sur la figure 4, la superposition de deux modules 20 forme une liaison électrique entre les deux connecteurs B1, B2 de la surface supérieure 23 du premier module, positionné sous le second module, avec les deux connecteurs A1, A2 de la surface inférieure 22 de ce second module. Pour cela, les connecteurs B1, B2 supérieurs de chaque module 20 sont précisément superposés à leurs connecteurs A1, A2 inférieurs, pour garantir la connexion électrique entre les modules lors du montage de la batterie. Tous les modules 20 utilisés présentent ainsi la même connectique de puissance et le même format. Ils sont ainsi interchangeables.

En complément, la forme globale de chaque module favorise aussi leur liaison physique, voire mécanique, en complément des connexions électriques susmentionnées. En option, Il est possible d'envisager des éléments de guidage pour faciliter l'ajustement respectif de deux modules et la correspondance de leurs connecteurs destinés à coopérer.

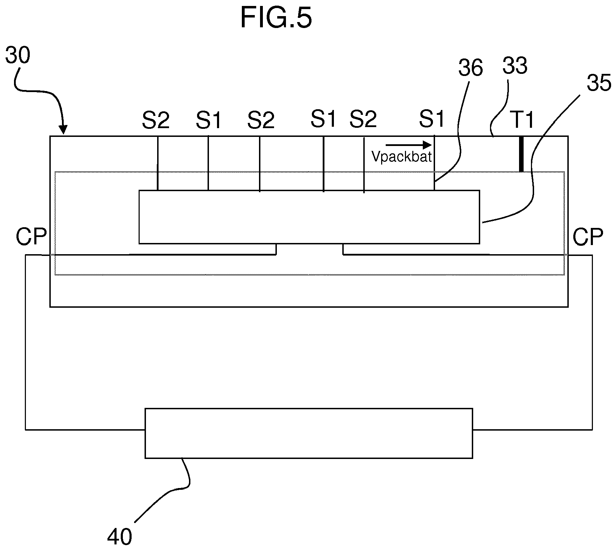

Le support d'accueil 30 de la batterie, particulièrement représenté par la figure 5, supporte tout l'empilement vertical des modules 20. Il remplit ainsi la fonction de support mécanique des composants de la batterie. Il se présente aussi sous la forme d'une entité physique indépendante, aussi de forme parallélépipédique dans ce mode de réalisation. Il comprend trois paires de connecteurs de puissance S1, S2 sur sa surface supérieure 33, qui sont respectivement connectés aux paires de connecteurs A1, A2 agencés sur la surface inférieure 22 du premier module 20 de la batterie, dans une batterie telle que celle représentée par la figure 4.

Enfin, la batterie comprend un capuchon de fermeture 50, qui se présente de même comme une entité physique indépendante, destinée à être positionnée à l'extrémité de la batterie opposée au support d'accueil 30, l'extrémité supérieure sur l'empilement vertical choisi par ce mode de réalisation. Ce capuchon de fermeture 50 comprend trois paires de connecteurs C1, C2 sous sa surface inférieure, qui sont respectivement connectées aux paires de connecteurs B1, B2 du dernier module 20. Ensuite, il comprend des composants de connexion 57 ou liaisons électriques 57 de puissance, qui relient simplement les deux connecteurs C1, C2 de chaque paire. La fonction de ce capuchon de fermeture 50 est ainsi tout simplement de fermer le circuit électrique pour former un chemin de puissance fermé entre les paires deux connecteurs de puissance S1, S2 du support d'accueil, en reliant les deux liaisons électriques 27, 29 de puissance de chaque bloc de chaque module.

Par cette architecture, le support d'accueil 30 de la batterie est ainsi électriquement relié, directement ou indirectement, par ses paires de connecteurs de puissance S1, S2 à toutes les cellules de tous les modules de la batterie. Plus précisément, toutes les premières liaisons électriques 29 de puissance de chaque bloc de tous les modules 20 sont reliées en série entre des connecteurs S1 et C1 de respectivement le support d'accueil 30 et le capuchon de fermeture 50, formant des premiers circuits de puissance selon une première direction. Ensuite, toutes les secondes liaisons électriques 29 de puissance de chaque bloc de tous les modules 20 sont reliées en série entre des connecteurs C2 et S2 de respectivement le capuchon de fermeture 50 et le support d'accueil 30, formant des seconds circuits de puissance selon une seconde direction opposée.

Les deux circuits de puissance sont reliés en série par l'intermédiaire du capuchon de fermeture. Ainsi, chaque module 20 de la batterie présente trois blocs qui sont chacun une partie d'un étage de la batterie finale, appartenant au premier circuit électrique de puissance selon une première direction, et un second ensemble, qui forme un étage distinct de la batterie finale, appartenant au second circuit électrique de puissance selon une seconde direction opposée à la première. Dans cette réalisation, chaque bloc de chaque module est donc traversé par deux circuits électriques de puissance indépendants destinés à être traversés par des courants de sens opposés à chaque instant.

Ainsi, chaque module comprend finalement six liaisons électriques de puissance, deux liaisons de puissance formant des circuits de puissance dans un sens et l'autre sens pour chaque partie active. La batterie 10 comprend ainsi trois chemins de puissance indépendants, chacun comprenant un circuit électrique dans un premier sens et un circuit électrique dans un second sens, ces deux circuits traversant tous les modules. Le support d'accueil reçoit ainsi la puissance provenant de ces trois chemins de puissance : cette solution est ainsi adaptée pour un fonctionnement triphasé, notamment pour l'alimentation d'un moteur triphasé, et pour une recharge sur un réseau électrique triphasé.

En effet, chaque module 20 est apte à fournir une tension variable, ce qui permet à l'ensemble de la batterie de générer une tension variable, sur chaque phase, de manière plus ou moins importante en fonction du nombre de modules et/ou de cellules utilisés. En effet, en combinant les différentes configurations électriques de chaque module, décrites ci-dessus, pour chaque module de la batterie, cette dernière présente rapidement un nombre important de configurations possibles, et de tension et/ou courant de sortie entre les deux connecteurs de puissance S1, S2. Notamment, il est possible de générer une tension continue ou une tension variable, notamment une tension s'approchant d'une tension alternative, en gérant dans le temps les variations de tension des différents modules de la batterie de manière adaptée.

Cette batterie peut ainsi directement alimenter un moteur en courant alternatif. De manière similaire, la batterie peut être chargée par l'intermédiaire d'une connexion en tension alternative, sur un réseau électrique triphasé. Pour cela, il suffit de modifier en temps réel la configuration de la batterie, en actionnant les interrupteurs des différents modules, pour atteindre le nombre calculé à tout instant de cellules en série ou parallèle pour atteindre les tensions et courant de charge souhaités au sein de chaque cellule. Dans cette approche, la tension à vide de la batterie reste toujours fixée légèrement inférieure à la tension d'alimentation, pour assurer un courant circulant de l'alimentation vers la batterie, et plus précisément vers les modules et/ou cellules à recharger. L'écart moyen entre la tension d'alimentation et la tension à vide correspond à une chute de tension résistive dont la valeur moyenne permet d'ajuster le courant moyen de recharge. Une inductance entre la source de tension et le pack batterie peut être rajoutée pour lisser le courant.

Dans l'architecture de batterie décrite, il apparait donc que les cellules 21 de n'importe quel module 20 donné de la batterie représentée sur la figure 4 sont finalement électriquement reliées au support d'accueil 30. Les liaisons électriques 27, 29 des modules 20, mentionnées précédemment, sont donc des liaisons électriques adaptées pour la transmission de puissance de ou vers les cellules de la batterie, et c'est pourquoi nous les appelons liaisons électriques de puissance. Elles peuvent par exemple être soumises à des courants de plusieurs Ampères, voire plusieurs centaines d'Ampères. Leurs dimensions doivent notamment être adaptées au passage de ce courant, à savoir présenter une section de passage du courant suffisante pour qu'il n'y ait pas d'échauffement significatif par effet Joule. Elles sont naturellement adaptées au passage d'un courant alternatif, pour la mise en oeuvre d'une solution triphasée conventionnelle.

Le support d'accueil 30, comme représenté sur la figure 5, comprend de plus des liaisons électriques 36 de puissance, reliés à deux connecteurs de sortie CP, qui permettent la connexion de la batterie avec un dispositif extérieur, pour alimenter une charge 40 par exemple, comme cela est représenté sur la figure 5, sur laquelle les modules 20 ne sont pas représentés pour alléger la figure. Optionnellement, un convertisseur DC/DC ou AC/DC 35 interne peut être agencé entre leurs connecteurs de puissance S1, S2 et les connecteurs de sortie.

Le support d'accueil 30 reçoit sur chaque phase, entre deux connecteurs de puissance S1, S2, la différence de potentiel Vpackbat entre l'étage de plus fort potentiel et l'étage de moins fort potentiel de la batterie. Finalement, il apparaît que la batterie telle que représentée sur la figure 4, présente, entre ses deux connecteurs de puissance S1, S2, une architecture électrique finalement similaire à celle de la figure 1 mais adaptée à une solution triphasée, et présentant les nombreux avantages qui seront détaillés par la suite.

Dans le mode de réalisation décrit, la batterie intègre de plus une fonction de communication, à l'aide d'une liaison de communication. Pour cela, chaque module 20 comprend une liaison de communication 28, agencée entre deux connecteurs de communication E1, F1 respectivement agencés au niveau des surfaces inférieure et supérieure 22, 23 de chaque module. Le connecteur F1 d'un premier module est connecté au connecteur E1 d'un second module, ces deux connecteurs étant ainsi parfaitement superposés dans chaque module. La connexion de toutes les liaisons de communication 28 des différents modules forme un bus de communication de la batterie, qui est relié au support d'accueil 30 par un connecteur de communication T1 agencé à la surface supérieure de ce dernier, et connecté au connecteur de communication E1 inférieur du premier module de la batterie.

Enfin, chaque module comprend au moins un capteur de mesure 26, relié à la liaison de communication 28 du module afin de transmettre ses mesures à l'extérieur du module. Ce au moins un capteur de mesure 26 disposé au sein d'un module peut par exemple être un capteur de température, et/ou de tension, et/ou de courant. Le bus de communication peut ainsi permettre de transmettre au support d'accueil 30 des mesures de température, et/ou une mesure de tension aux bornes d'une ou plusieurs cellule(s) et/ou du module, et/ou une mesure de courant.

Dans ce mode de réalisation, le support d'accueil comprend avantageusement une unité de gestion, non représentée, comprenant au moins un calculateur, qui met en oeuvre un procédé de gestion de la batterie prenant en compte les différentes mesures reçues depuis les modules par le bus de communication, à partir de dispositifs matériel (hardware) et/ou logiciel (software). En retour, cette unité de gestion retourne des ordres de commande aux modules, comme par exemple un ordre d'activation d'un ventilateur pour faire face à une montée en température au sein d'un certain module, ou un ordre d'isolation électrique d'un module et/ou d'une ou plusieurs cellules du module, par exemple par l'intermédiaire d'au moins un interrupteur disposé au sein du module. En complément, le bus de communication peut transférer une faible alimentation électrique, pour l'alimentation d'un ou plusieurs capteurs, et/ou d'un ventilateur, et/ou de composants internes à un module nécessitant une alimentation électrique. En remarque, cette alimentation électrique, transmise par le support d'accueil, est avantageusement issue de la puissance d'au moins une cellule de la batterie, ce qui laisse la batterie autonome. En remarque, un élément d'isolation galvanique est avantageusement agencé entre le bus de communication et chaque module, pour limiter tout risque électrique. D'autre part, chaque module peut comprendre un calculateur, utilisé pour gérer la communication, remplissant notamment la fonction de cadencement des mesures, leur traitement et adaptation au protocole de communication du bus de communication. Les alimentations électriques et les communications circulant sur le bus de communication sont de nature très éloignées aux courants de puissance mentionnés précédemment, et présentent une architecture et une fonction totalement différentes.

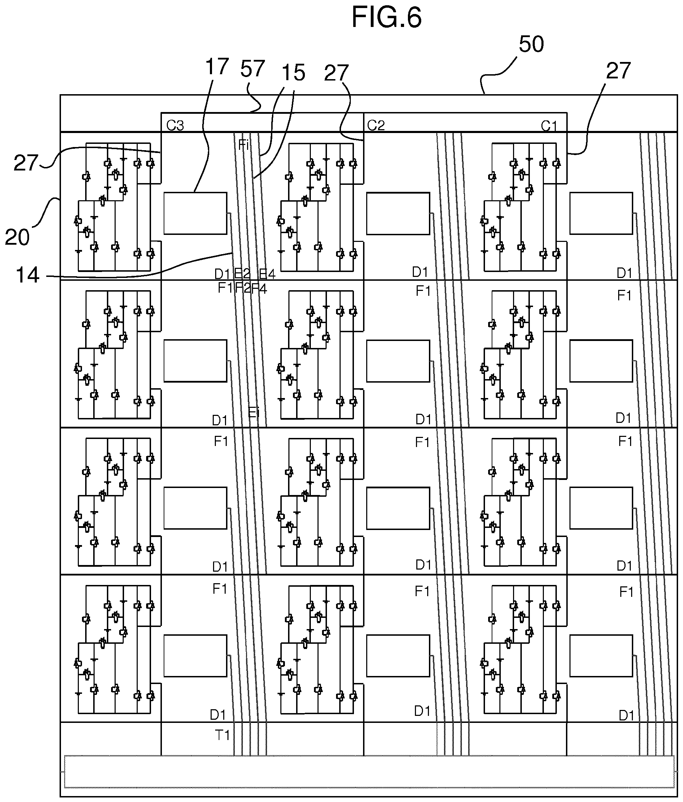

La figure 6 représente un autre mode de réalisation de batterie, dans laquelle chaque module qui comprend aussi trois blocs formant des parties actives indépendantes similaires à celles du mode de réalisation précédent, en vue d'offrir une puissance triphasée. Toutefois, dans cette réalisation, les trois circuits électriques distincts de retour, formés dans la réalisation précédente par la liaison série de trois liaisons électriques 29 indépendantes de chaque module, sont évitées. En effet, les trois liaisons électriques 27 de puissance de chaque partie active sont simplement reliées entre elles par trois connecteurs C1, C2, C3 reliés à une liaison électrique 57 du capuchon de fermeture 50. Cette architecture correspond à un fonctionnement triphasé en étoile, dont le point milieu correspond au potentiel de la liaison électrique 57 interne au capuchon de fermeture 50.

Ce mode de réalisation diffère aussi des modes de réalisation précédents par l'architecture de son réseau de liaisons de communication. En effet, chaque module 20 comprend une unité de gestion 17 par ensemble actif reliée par une première liaison de communication 14 jusqu'à un connecteur de gestion D1 supplémentaire agencé dans la surface inférieure 22 d'un module. Des secondes liaisons de communication 15, indépendantes de ces premières liaisons de communication 14, traversent chaque module 20 entre des connecteurs de communication Ei et Fi respectivement agencés dans la surface inférieure 22 et la surface supérieure 23 de chaque module 20, non tous représentés en détail pour ne pas alourdir la figure. Ces liaisons de communication 15 sont totalement indépendantes de l'unité de gestion 17 et de sa liaison de communication 14. Le terme « indépendant » signifie donc que ces liaisons de communication 15 n'ont aucun lien physique avec l'unité de gestion 17 et sa liaison de communication 14, n'ont aucun point dont le potentiel, non nul, serait dépendant d'au moins une cellule 21 de ce module 20 ou de l'unité de gestion 17. Cette architecture de communication est reproduite à l'identique pour chaque ensemble actif participant à chaque phase de la batterie, est donc triplée dans cette réalisation.

Comme cela apparaît sur la figure 6, deux modules juxtaposés mettent en oeuvre à la fois des liaisons électriques de puissance, comme mentionné précédemment, mais aussi des connecteurs de communication, les connecteurs de communication Ei agencés au niveau de la surface inférieure d'un module venant en liaison avec les connecteurs de communication Fi₊₁ agencés au niveau de la surface supérieure de l'autre module, et les connecteurs de gestion D1 venant en coopération avec le premier connecteur de communication F1. Dans cette réalisation, il apparaît que toutes les unités de gestion 17 de tous les modules sont liés par des liaisons de communication avec le support d'accueil 30, qui est aussi aménagé pour présenter les connexions supplémentaires Ti coopérant avec tous les connecteurs de communication de la face inférieure du premier module de la batterie.

Dans ce mode de réalisation, les secondes liaisons de communication 15 indépendantes d'un module sont sensiblement parallèles et inclinées pour permettre finalement de superposer leur connecteur inférieur Ei avec un connecteur supérieur Fi₊₁. Avec une réalisation de modules comprenant quatre secondes liaisons de communication 15 indépendantes, il apparaît qu'il est possible de construire une batterie avec au maximum cinq modules 20 superposés. Naturellement, le même principe peut être implémenté pour tout autre nombre de liaisons de communication 15 indépendantes et connecteurs Ei, Fi associés. Par ce biais, il apparaît que chaque unité de gestion 17 est reliée au support d'accueil par l'intermédiaire de sa liaison de communication 14 puis par d'éventuelles liaisons de communication 15 indépendantes des modules situés entre le module considéré et le support d'accueil, ces liaisons de communication 15 indépendantes servant uniquement à traverser lesdits modules, sans remplir de fonction spécifique pour lesdits modules. Cette architecture permet ainsi la communication de tous les modules sans mettre en place un bus de communication comme décrit dans certains des modes de réalisation précédents. En remarque, l'architecture de communication est ici triplée, pour en obtenir une par phase. La même approche pourrait aussi être implémentée en variante du bus de communication décrit dans les modes de réalisation précédents.

Dans ce mode de réalisation, une intelligence centralisée de la batterie, intégrée sous la forme de logiciel (software) et/ou matériel (hardware) au sein du support d'accueil 30, peut communiquer directement avec chacune des phases de chacun des modules, de manière séparée, via une (voire en variante plusieurs) liaison de communication dédiée.

En variante, au lieu d'avoir un lien de communication direct vers chaque phase de chaque module, on peut prévoir un seul lien de communication vers chaque module, puis intégrer un élément interne à chaque module dont la fonction est d'aiguiller l'information vers la phase concernée. Cet aiguillage pourrait par exemple être mis en oeuvre par l'intermédiaire d'une adresse contenue dans les données qui transitent par le lien de communication, qui peut être un bus série.

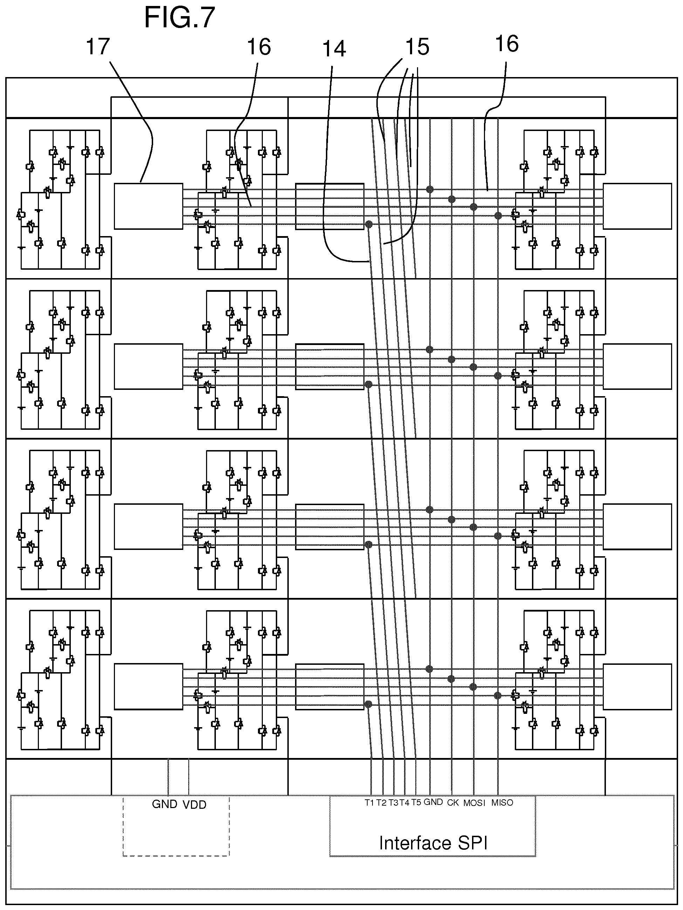

La figure 7 représente un troisième mode de réalisation d'une batterie, qui diffère du mode de réalisation précédent par l'organisation de son réseau de communication. Dans cette réalisation, un bus de communication de type SPI est mis en oeuvre. Ce bus comprend ainsi :
- une ligne de masse (GND), d'horloge (CK), d'envoi (MOSI), de retour (MISO), ces lignes étant communes pour chaque phase de chaque module. Pour cela, chaque module prévoit des liaisons internes 16 de l'unité de gestion de chaque phase vers ces lignes de communication ;
- En complément, une liaison de communication supplémentaire relie les différentes unités de chaque module au support d'accueil. Différentes liaisons de communication 15 indépendantes sont agencées au sein de chaque module selon le principe explicité en référence avec le mode de réalisation précédent. Toutefois, dans cette variante, des liaisons de communications internes permettent de mettre en oeuvre ce principe une seule fois pour toutes les phases, ce qui limite le nombre de connecteurs à prévoir sur l'enveloppe des modules.

Dans ce mode de réalisation, des éléments formant isolation galvanique, non représentés, sont avantageusement agencés au niveau des liaisons entre les différentes unités de gestion 17 et les liaisons de communication, car ces unités sont susceptibles de fonctionner à des potentiels très différents. Cette isolation galvanique peut par exemple se faire en utilisant des optocoupleurs, des transformateurs, des liaisons capacitives, des modules radio...

Les architectures évoluées, par exemple celles des modes de réalisation illustrés par les figures 5 à 7, permettent la mise en oeuvre d'un procédé de gestion avantageux d'une batterie, qui peut être piloté par une unité de gestion du support d'accueil et/ou des modules, qui est dotée de moyens matériel (hardware), comme au moins un calculateur et une mémoire, et des moyens logiciel (software).

Ce procédé de gestion met notamment en oeuvre une étape d'équilibrage de la tension des différents modules. Pour cela, les modules les plus chargés, détectés par la tension reçue et mesurée par l'unité de gestion, sont utilisés en priorité. En effet, par le mécanisme de mise en série ou non du module avec le reste de la batterie, par le jeu des interrupteurs explicité précédemment, chaque module peut finalement être ou non utilisé à un instant donné. Il est ainsi possible d'écarter un module plus déchargé que les autres le temps nécessaire pour obtenir un rééquilibrage des tensions des modules. Les modifications de l'utilisation ou non des différents modules peuvent se faire périodiquement, selon un rapport cyclique calculé pour chaque module de manière à obtenir un équilibrage des modules de la batterie. Ce principe peut même être appliqué au niveau de chaque cellule ou groupe de cellules au sein de chaque module. De manière similaire, la charge de la batterie met en oeuvre une étape de charge plus importante des modules les moins chargés, par leur mise en série lors de cette phase de charge de manière prioritaire et/ou selon une durée globale plus importante que d'autres modules plus chargés.

Le procédé de gestion met aussi en oeuvre une étape d'adaptation en temps réel ou quasi temps réel de la tension de sortie de la batterie en fonction du besoin d'un dispositif 40 à alimenter. Pour cela, l'unité de gestion déconnecte ou non certains des modules de leur liaison série avec les autres modules, et/ou modifie la configuration de la batterie au niveau des différentes cellules la composant, comme explicité précédemment. Cette unité de gestion peut ainsi gérer les différentes cellules de chaque bloc pour obtenir une sortie triphasée, dans laquelle chaque phase présente un signal de sortie sensiblement sinusoïdal. Avec l'approche modulaire proposée, il est possible de générer des signaux multi-phases, avec des amplitudes ajustables en fonction du nombre de modules connectés.

Naturellement, le support d'accueil 30 décrit précédemment peut présenter d'autres formes et architectures intérieures. Il est adapté à la connectique et à la structure des modules. Par exemple, il peut gérer une sortie triphasée comme explicité ci-dessus. Il peut aussi comprendre une connectique de communication (Ti). Ces liaisons de communication peuvent être reliées à une unité de gestion interne, lui permettant de recevoir des mesures de capteurs, par exemple de température, tension et/ou courant, provenant de tout ou partie des modules et/ou cellules, pour établir un diagnostic des différents modules et/ou cellules concernés et utiliser ces données dans la gestion de leur utilisation et/ou de leur charge.

Ainsi, l'architecture d'une batterie telle que décrite par les modes de réalisation précédents répond bien aux objets recherchés et atteint les avantages suivants :
- Il est possible de construire une structure modulaire flexible, en formant un assemblage de simples modules, sans recours à un bâti ;
- Un utilisateur peut se contenter du nombre de modules suffisant pour une utilisation particulière ;
- l'encombrement obtenu se limite donc aux modules réellement nécessaires ;
- il est possible d'empiler un nombre quelconque de modules, sans imite théorique, pour atteindre les caractéristiques électriques nécessaires ;
- Il est possible de remplacer facilement un module défaillant, sans remettre en cause le reste des composants de la batterie ;
- dans les réalisations décrites, tous les modules peuvent être assemblés dans un ordre quelconque, par leur simple superposition ;
- la solution permet d'offrir une sortie triphasée, par trois phases de tension variable, et d'accepter en entrée une tension triphasée.

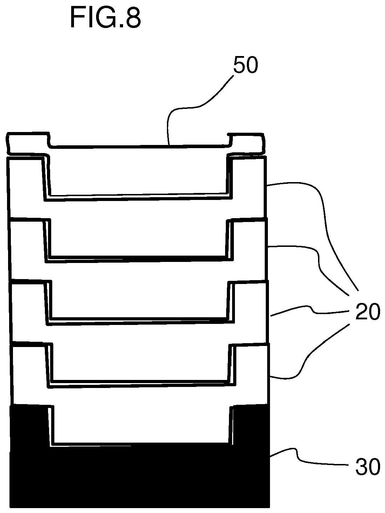

Tous les modules décrits dans les modes de réalisation précédents peuvent subir de nombreuses modifications et variantes sans sortir du concept de l'invention. Notamment, les différents connecteurs peuvent prendre différentes formes et être agencés en différents endroits sur l'enveloppe 25 d'un module, non nécessairement limités aux surfaces supérieure et inférieure. D'ailleurs, ces modules peuvent aussi se présenter sous tout autre format, dès lors qu'il permet leur emboîtement comme décrit précédemment. A cet effet, la figure 8 représente schématiquement une variante de réalisation basée sur une forme différente des modules. En variante, les modules pourraient être assemblés dans une direction latérale, en plus ou en remplacement des empilements verticaux représentés. D'autre part, la partie active des modules peut être quelconque, comprendre toute organisation électrique et tout nombre de cellules. Le terme de module doit s'entendre au sens large, peut correspondre à tout sous-ensemble de batterie. En variante, il est aussi possible d'imaginer des assemblages de modules non obligatoirement tous identiques, mais pouvant aussi présenter des formats différents et/ou des structures internes différentes, dès lors que leur format reste compatible et permet leur assemblage mécanique et électrique. Naturellement, les différents modes de réalisation décrits peuvent être combinés entre eux pour fournir d'autres variantes et d'autres modes de réalisation.

En remarque, tout ou partie des cellules d'une batterie telle que décrite précédemment peut être associée à une source locale d'énergie, par exemple de type capteur solaire, capteur thermique, convertisseur mécanique/électrique, pile à combustible, etc., pour profiter de cette source pour son rechargement par exemple, et/ou pour apporter des possibilités supplémentaires pour la fourniture d'énergie par la batterie.

L'élément de stockage peut être une batterie, mais aussi une capacité, un moteur/alternateur associé à un volant d'inertie ou tout autre élément de stockage électrique.

D'autre part, les modes de réalisation ont été décrits avec un capuchon 50, qui se présente sous la forme d'un bâti rigide. En variante, ce capuchon peut être remplacé par toute liaison électrique remplissant une fonction équivalente, notamment un simple câblage. Ainsi, les modes de réalisation décrits peuvent en variante comprendre tout composant de connexion 57 permettant de relier des liaisons électriques de puissance d'un ou de plusieurs modules. Pour cela, ce composant de connexion relie électriquement au moins deux liaisons électriques de puissance de chaque module.

De manière similaire, les modes de réalisation ont été illustrés avec un support, qui présente l'avantage de séparer certaines fonctions : le support prend en charge la gestion et la liaison avec une charge externe, alors que les différents modules, qui comprennent les cellules actives, au contraire du support qui n'en comprend pas, remplissent la fonction de génération et/ou stockage d'énergie. Toutefois, ce support pourrait être supprimé. Dans cette variante simplifiée, une charge pourrait être directement reliée au premier module de l'assemblage, par tout moyen comme un simple câblage. Ainsi, la batterie comprend donc des connecteurs de sortie, qui peuvent correspondre dans une réalisation simplifiée à des connecteurs directement agencés sur une enveloppe d'un module de la batterie. De plus, les différentes fonctions de gestion, intégrées au sein du support, pourraient être reportées et distribuées directement au sein d'un ou plusieurs modules de la batterie. Notamment, une variante de réalisation avantageuse consiste à prévoir une unité de gestion au sein de chaque module, suffisamment autonome pour commander tous les interrupteurs du module.

De plus, les modes de réalisation ont été décrits dans une approche triphasée. Naturellement, d'autres variantes de réalisation peuvent être mises en oeuvre pour un dispositif multi-phases, le nombre de phases pouvant être quelconque.

Enfin, chaque bloc de module a été illustré avec un agencement de ses cellules sur une même liaison électrique de puissance, une seconde liaison étant le cas échéant présente et indépendante de toutes les cellules. En variante, il est possible de disposer des cellules au niveau de la seconde liaison électrique de puissance, pour former deux ensembles électriquement indépendants, ce qui signifie donc que les deux liaisons électriques 27, 29 n'ont aucun lien physique, que les cellules 21 respectives des deux ensembles n'ont pas de liaison électrique directe entre elles au sein de l'enveloppe 25 du module 20.

Selon une autre variante, toutes les architectures précédentes ont été décrites dans le cadre d'une batterie, mais pourraient aussi s'appliquer à un dispositif générateur d'énergie, comme mentionné initialement, lesdites cellules n'étant plus des cellules de stockage d'énergie mais des cellules de génération d'énergie, par exemple de type photovoltaïque, éventuellement associées à des composants de stockage d'énergie.

Par exemple, un mode de réalisation envisagé peut consister en une association de modules photovoltaïques, comprenant une structure en blocs telle que décrite précédemment pour pouvoir générer plusieurs signaux et former un générateur multi-phases, générant en sortie de préférence plusieurs signaux alternatifs. En complément, les modules sont aussi reliés sur une extrémité de l'assemblage par de simples fils électriques formant un composant de connexion, permettant de fermer les liaisons électriques de puissance des modules, de manière semblable au capuchon décrit précédemment. De plus, le premier module photovoltaïque de l'assemblage est apte à être relié directement à une charge.

L'invention porte aussi sur un procédé de montage (conception, fabrication) d'une batterie, comprenant une étape de détermination du nombre de modules nécessaires en fonction d'une utilisation prédéterminée, puis la connexion des modules nécessaires entre eux sous la forme d'une chaîne de modules, et la connexion du premier module de la chaine de modules sur un support d'accueil et du dernier module avec un capuchon de fermeture. Parmi les utilisations avantageuses d'une telle batterie, il est possible de citer l'alimentation d'un engin de transport, comme une voiture, un bus, un bateau, une moto, etc., ou l'implémentation pour alimenter un matériel électroportatif, une station de base pour la téléphonie, un générateur de secours, etc.

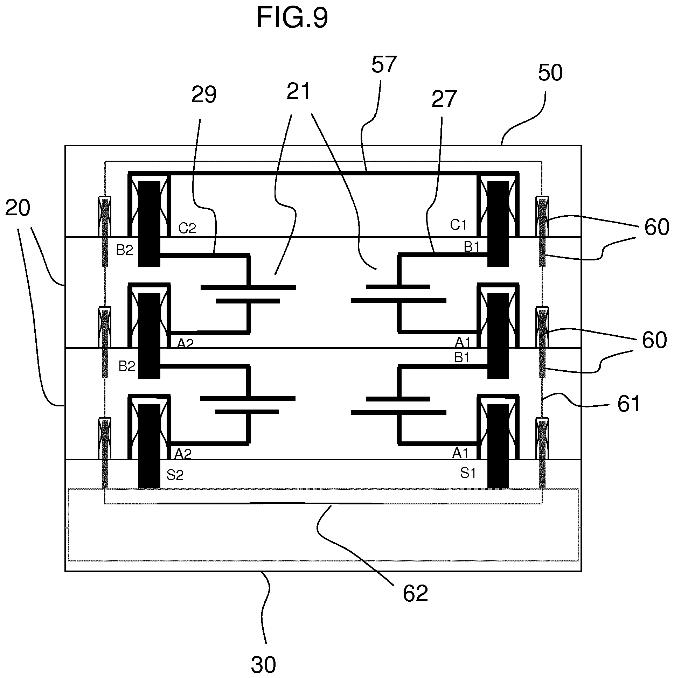

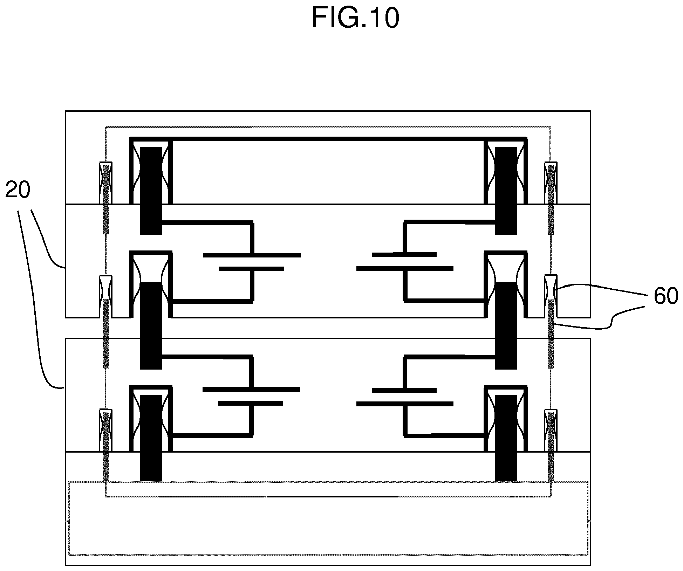

Un problème technique se pose lors du montage d'un dispositif de transmission d'énergie tel que décrit. En effet, si un module est mal positionné, le chemin de puissance risque d'être coupé, et les différentes connexions de puissance ou de communication deviennent alors incertaines et peu fiables. Pour répondre à ce problème technique, une solution est proposée en référence avec les figures 9 et 10, qui peut être implémentée sur tous les modes de réalisation décrits précédemment. Pour cela, les différents composants du dispositif sont dotés de connecteurs 60 et liaisons électriques 61 supplémentaires. Lorsque les différents composants sont bien positionnés, comme représenté par la figure 11, un circuit de détection 62 détecte qu'une boucle électrique fermée est formée. Cette détection peut se faire par une mesure de la continuité électrique de la boucle, par exemple en vérifiant simplement qu'un courant électrique peut y circuler.

Dans toute mauvaise configuration, comme représenté par la figure 12 où les deux modules 20 sont insuffisamment rapprochés, le dispositif permettra donc de détecter l'anomalie, par exemple au niveau de l'unité de gestion centralisée au sein du support d'accueil 30. Dans une telle situation, l'arrêt de l'utilisation du dispositif peut être immédiatement et automatiquement décidé. En effet, une telle action permet aussi de sécuriser le dispositif, car cette configuration peut survenir au moment du retrait d'un module ou du capuchon de fermeture par exemple.

En variante de réalisation, une diode électroluminescente (ou tout autre indicateur) peut être placée en série sur le circuit de détection 62. Lors du test de continuité, un passage de courant permet ainsi à un utilisateur de s'apercevoir de l'état du dispositif en fonction de l'éclairage ou du non éclairage de la diode. La ou les diode(s) peuvent être placées n'importe où sur le circuit de détection 62 : sur le capuchon de fermeture 50, sur un ou plusieurs module(s), sur le support d'accueil, voire à l'extérieur via un prolongement du circuit de détection.

Pour optimiser l'efficacité de la détection d'un début de retrait d'un module ou du capuchon de fermeture, il est intéressant de placer les connecteurs d'un module du circuit de détection éloignés les uns des autres. Ces connecteurs peuvent être par exemple placés dans des angles opposés dans le cas de modules de surface supérieure et/ou inférieure carré ou rectangle.

Avantageusement, le contact électrique dans les connecteurs de la boucle de détection se coupent avant que le/les chemins de puissance ne s'ouvrent de façon à détecter par anticipation l'ouverture du/des chemins de puissance et commander l'arrêt du courant avant que le chemin de puissance soit insuffisant ou rompu et éviter tout risque d'échauffement ou d'arcs électriques au niveau des connecteurs de puissance.

## Revendications

1. Dispositif de transmission d'énergie, notamment batterie ou dispositif générateur d'énergie **caractérisé en ce qu'**il comprend :
- au moins un module (20) agencé au sein d'une enveloppe (25), comprenant plusieurs liaisons électriques de puissance (27, 29) indépendantes et plusieurs blocs comprenant chacun :
- au moins une première liaison électrique (27) de puissance reliée à une paire de connecteurs (A1, B1), et
- plusieurs cellules (21) liées électriquement à cette première liaison électrique (27) de puissance, permettant de connecter ces cellules (21) avec des composants externes au module (20) par l'intermédiaire de la paire de connecteurs (A1, B1), et
- la paire de connecteurs (A1, B1), agencée sur l'enveloppe (25) du module, de sorte à être apte à une connexion électrique avec un connecteur électrique d'un second module qui comprendrait une même paire de connecteurs,
- des interrupteurs (24) aptes à modifier la liaison électrique entre plusieurs cellules (21) du bloc, permettant notamment de relier deux cellules (21) en série ou de shunter une ou plusieurs cellule(s) (21), pour pouvoir varier la tension entre la paire de connecteurs (A1, B1),
- un composant de connexion (57) permettant de relier électriquement plusieurs liaisons électriques (27, 29) de puissance indépendantes du au moins un module (20),
- plusieurs connecteurs de sortie (A1, A2 ; A1 ; CP) permettant une liaison électrique multi-phases, notamment triphasée, du dispositif de transmission d'énergie avec un composant extérieur, chaque connecteur de sortie étant relié électriquement à au moins une liaison électrique (27, 29) de puissance d'un bloc d'un ou de plusieurs modules (20) du dispositif de transmission d'énergie.

2. Dispositif de transmission d'énergie selon la revendication précédente, **caractérisé en ce qu'**il comprend au moins une unité de gestion (17) qui commande l'ouverture et la fermeture d'interrupteurs (24) agencés au sein d'un module (20) pour obtenir un signal variable sur chaque phase du dispositif de transmission d'énergie.

3. Dispositif de transmission d'énergie selon la revendication précédente, **caractérisé en ce que** la ou les unités de gestion génèrent un signal alternatif sur chaque phase du dispositif de transmission d'énergie.

4. Dispositif de transmission d'énergie selon la revendication 2 ou 3, **caractérisé en ce qu'**il comprend une unité de gestion (17) dans chaque module (20) qui commande les interrupteurs (24) du module (20).

5. Dispositif de transmission d'énergie selon l'une des revendications précédentes, **caractérisé en ce qu'**il comprend :
- un module (20) comprenant un bloc comprenant au moins une première liaison électrique (27) de puissance et au moins une seconde liaison électrique (29) de puissance indépendantes, reliées respectivement à deux paires de connecteurs (A1, B1), (A2, B2) distinctes, agencées sur l'enveloppe (25) du module, permettant de connecter les cellules (21) du bloc avec des composants externes au module (20), les deux paires de connecteurs (A1, B1), (A2, B2) étant agencées sur l'enveloppe (25) de sorte qu'une paire de connecteurs (A2, B2) est apte à une connexion électrique avec la première paire (A1, B1) d'un autre module (20) similaire,
- un composant de connexion permettant de relier les deux liaisons électriques (27, 29) de puissance de chaque bloc de chaque module (20),
- plusieurs paires de connecteurs (A1, A2 ; CP) permettant une liaison électrique multi-phases avec un composant extérieur, chaque paire de connecteurs (A1, A2) étant reliée aux liaisons de puissance (27, 29) d'un bloc d'un ou de plusieurs modules (20) du dispositif de transmission d'énergie.

6. Dispositif de transmission d'énergie selon l'une des revendications précédentes, **caractérisé en ce qu'**il comprend au moins un module (20) comprenant au moins une seconde liaison électrique (29) de puissance s'étendant entre des seconds connecteurs (A2, B2) du module (20) sous la forme d'une simple liaison électrique de puissance indépendante de toute cellule (21) du module (20).

7. Dispositif de transmission d'énergie selon l'une des revendications précédentes, **caractérisé en ce qu'**il comprend au moins un module (20) présentant une liaison de communication (28 ; 14, 15) et des connecteurs (Ei, Fi ; D1) de communication pour permettre des échanges de communication avec une entité extérieure au module (20).

8. Dispositif de transmission d'énergie selon la revendication précédente, **caractérisé en ce que** :
- tous les modules (20) comprennent une liaison de communication (28) connectée avec celle de ses voisins pour former un bus de communication traversant tous les modules (20) du dispositif de transmission d'énergie,
ou
- tous les modules (20) comprennent une liaison de communication (14) reliée à un connecteur (D1) de communication du module et des secondes liaisons de communication (15) indépendantes s'étendant entre deux connecteurs de communication (Ei, Fi) du module (20),
Et
**en ce que** le dispositif de transmission d'énergie comprend une unité de contrôle reliée par une liaison de communication à au moins un module (20), de manière apte à lui transmettre des ordres et/ou à recevoir des informations.

9. Dispositif de transmission d'énergie selon l'une des revendications précédentes, **caractérisé en ce qu'**il comprend au moins un module (20) qui comprend tout ou partie de :
- une unité de gestion (17) ;
- au moins un capteur de mesure (26) de température, et/ou de courant et/ou de tension ;
- un élément (18) formant isolation galvanique entre une liaison de communication et le reste du module ;
- un pilote (19) de gestion d'énergie ;
- un pilote d'interrupteurs ;
- un ventilateur.

10. Dispositif de transmission d'énergie selon l'une des revendications précédentes, **caractérisé en ce que** chaque bloc de chaque module comprend une liaison électrique (27) de puissance, et **en ce que** ces liaisons électriques (27) de puissance de tous les blocs sont reliées par un composant de connexion (57) pour former une architecture triphasée en étoile.

11. Dispositif de transmission d'énergie selon l'une des revendications précédentes, **caractérisé en ce qu'**il comprend un support d'accueil (30), comprenant des paires de connecteurs de puissance (Si) pour recevoir la puissance transmise par tout ou partie d'au moins une cellule (21) d'au moins un module (20) électriquement connecté au support d'accueil (30) par des paires de connecteurs (Ai) du module (20) coopérant avec des connecteurs de puissance (Si) du support d'accueil,
et **en ce que** le support d'accueil (30) comprend des connecteurs de sortie (CP) pour relier le dispositif de transmission d'énergie à un dispositif (40) externe à alimenter,
et **en ce que** le support d'accueil (30) :
- comprend une unité de contrôle reliée par une liaison de communication à au moins un module (20) du dispositif de transmission d'énergie, apte à lui transmettre des ordres et à recevoir des informations de mesures ; et/ou
- comprend au moins un convertisseur DC/DC ou AC/DC (35) ;
et/ou
- reçoit l'empilement des modules (20) du dispositif de transmission d'énergie ; et/ou
- ne comprend pas de cellules.

12. Dispositif de transmission d'énergie selon l'une des revendications précédentes, **caractérisé en ce que** chaque module (20) se présente dans un format monolithique avec une enveloppe (25) au sein de laquelle sont agencés des connecteurs (Ai, Bi, D1, Ti).

13. Dispositif de transmission d'énergie selon la revendication précédente, **caractérisé en ce que** les modules (20) présentent une forme parallélépipédique, comprenant des connecteurs agencés sur leur surface supérieure (23) plane et sur leur surface inférieure (22) plane, permettant leur empilement vertical.

14. Dispositif de transmission d'énergie selon l'une des revendications précédentes, **caractérisé en ce que** les modules (20) comprennent des connecteurs (60) liés à des liaisons électriques (61) permettant de former un circuit de détection (62) permettant la détection du bon assemblage ou non du dispositif de transmission d'énergie.

15. Dispositif de transmission d'énergie selon l'une des revendications précédentes, **caractérisé en ce qu'**il comprend un capuchon de fermeture (50) comprenant au moins un composant de connexion (57) sous forme de liaison électrique de puissance reliant deux connecteurs (Ci) de puissance, le capuchon de fermeture (50) étant électriquement connecté à un module (20) par des connecteurs (Bi) du module coopérant avec des connecteurs (Ci) du capuchon de fermeture (50), de sorte que la liaison électrique de puissance du capuchon de fermeture (50) ferme un chemin de puissance entre deux liaisons électriques (27) de puissance dudit module (20).

16. Procédé de montage d'un dispositif de transmission d'énergie, notamment une batterie, **caractérisé en ce qu'**il comprend une étape de détermination du nombre de modules (20) nécessaires en fonction d'une utilisation prédéterminée, puis la connexion des modules (20) nécessaires entre eux sous la forme d'une chaîne de modules, pour former un dispositif de transmission d'énergie selon l'une des revendications 1 à 15.

17. Procédé de gestion d'un dispositif de transmission d'énergie, notamment une batterie, selon l'une des revendications 1 à 15, **caractérisé en ce qu'**il comprend une étape d'adaptation en temps réel ou quasi temps réel de la tension du dispositif de transmission d'énergie, par la connexion ou déconnexion de modules et/ou de cellules par au moins une unité de gestion, notamment pour obtenir une sortie triphasée au niveau des connecteurs de sortie du dispositif de transmission d'énergie.

## Patentansprüche

1. Vorrichtung zur Energieübertragung, insbesondere eine Batterie oder eine energieerzeugende Vorrichtung, **dadurch gekennzeichnet, dass** sie enthält:
- mindestens ein innerhalb einer Hülle (25) angeordnetes Modul (20), das mehrere unabhängige elektrische Leistungsverbindungen (27, 29) und mehrere Blöcke enthält, die jeweils enthalten:
- mindestens eine erste elektrische Leistungsverbindung (27), die mit einem Paar von Verbindern (A1, B1) verbunden ist, und
- mehrere elektrisch mit dieser ersten elektrischen Leistungsverbindung (27) verbundene Zellen (21), was es ermöglicht, diese Zellen (21) mit Bauteilen außerhalb des Moduls (20) über das Paar von Verbindern (A1, B1) zu verbinden, und
- das Paar von Verbindern (A1, B1), das auf der Hülle (25) des Modules angeordnet ist, um für eine elektrische Verbindung mit einem elektrischen Verbinder eines zweiten Moduls geeignet zu sein, das ein gleiches Paar von Verbindern aufweist,
- Schalter (24), die die elektrische Verbindung zwischen mehreren Zellen (21) des Blocks verändern können, die es insbesondere ermöglichen, zwei Zellen (21) in Reihe zu verbinden oder eine oder mehrere Zelle(n) (21) zu überbrücken, um die Spannung zwischen dem Paar von Verbindern (A1, B1) variieren zu können,
- ein Verbindungsbauteil (57), das es ermöglicht, mehrere unabhängige elektrische Leistungsverbindungen (27, 29) des mindestens einen Moduls (20) elektrisch zu verbinden,
- mehrere Ausgangsverbinder (A1, A2; A1; CP), die eine mehrphasige, insbesondere dreiphasige elektrische Verbindung der Energieübertragungsvorrichtung mit einem externen Bauteil ermöglichen, wobei jeder Ausgangsverbinder elektrisch mit mindestens einer elektrischen Leistungsverbindung (27, 29) eines Blocks eines oder mehrerer Module (20) der Energieübertragungsvorrichtung verbunden ist.

2. Energieübertragungsvorrichtung nach dem vorhergehenden Anspruch, **dadurch gekennzeichnet, dass** sie mindestens eine Verwaltungseinheit (17) enthält, die das Öffnen und Schließen von Schaltern (24) steuert, die innerhalb eines Moduls (20) angeordnet sind, um in jeder Phase der Energieübertragungsvorrichtung ein variables Signal zu erhalten.

3. Energieübertragungsvorrichtung nach dem vorhergehenden Anspruch, **dadurch gekennzeichnet, dass** die Verwaltungseinheit(en) in jeder Phase der Energieübertragungsvorrichtung ein alternatives Signal erzeugt(erzeugen).

4. Energieübertragungsvorrichtung nach Anspruch 2 oder 3, **dadurch gekennzeichnet, dass** sie eine Verwaltungseinheit (17) in jedem Modul (20) enthält, die die Schalter (24) des Moduls (20) steuert.

5. Energieübertragungsvorrichtung nach einem der vorhergehenden Ansprüche, **dadurch gekennzeichnet, dass** sie enthält:
- ein Modul (20), das einen Block enthält, der mindestens eine erste unabhängige elektrische Leistungsverbindung (27) und mindestens eine zweite unabhängige elektrische Leistungsverbindung (29) enthält, die mit zwei unterschiedlichen Paaren von Verbindern (A1, B1) bzw. (A2, B2) verbunden sind, die auf der Hülle (25) des Moduls angeordnet sind, was es ermöglicht, die Zellen (21) des Blocks mit Bauteilen außerhalb des Moduls (20) zu verbinden, wobei die zwei Paare von Verbindern (A1, B1), (A2, B2) so auf der Hülle (25) angeordnet sind, dass ein Paar von Verbindern (A2, B2) für eine elektrische Verbindung mit dem ersten Paar (A1, B1) eines anderen ähnlichen Moduls (20) geeignet ist,
- ein Verbindungsbauteil das es ermöglicht, die zwei elektrischen Leistungsverbindungen (27, 29) jedes Blocks jedes Moduls (20) zu verbinden,
- mehrere Paare von Verbindern (A1, A2; CP), die eine mehrphasige elektrische Verbindung mit einem externen Bauteil ermöglichen, wobei jedes Paar von Verbindern (A1, A2) mit den Leistungsverbindungen (27, 29) eines Blocks eines oder mehrerer Module (20) der Energieübertragungsvorrichtung verbunden ist.

6. Energieübertragungsvorrichtung nach einem der vorhergehenden Ansprüche, **dadurch gekennzeichnet, dass** sie mindestens ein Modul (20) enthält, das mindestens eine zweite elektrische Leistungsverbindung (29) enthält, die sich zwischen zweiten Verbindern (A2, B2) des Moduls (20) in Form einer einfachen elektrischen Leistungsverbindung unabhängig von jeder Zelle (21) des Moduls (20) erstreckt.

7. Energieübertragungsvorrichtung nach einem der vorhergehenden Ansprüche, **dadurch gekennzeichnet, dass** sie mindestens ein Modul (20) enthält, das eine Kommunikationsverbindung (28; 14, 15) und Kommunikationsverbinder (Ei, Fi; D1) aufweist, um Kommunikationsaustauschvorgänge mit einer Entität außerhalb des Moduls (20) zu erlauben.

8. Energieübertragungsvorrichtung nach dem vorhergehenden Anspruch, **dadurch gekennzeichnet, dass**:
- alle Module (20) eine Kommunikationsverbindung (28) enthalten, die mit derjenigen ihrer Nachbarn verbunden ist, um einen Kommunikationsbus zu bilden, der alle Module (20) der Energieübertragungsvorrichtung durchquert, oder
- alle Module (20) eine Kommunikationsverbindung (14), die mit einem Kommunikationsverbinder (D1) des Moduls verbunden ist, und zweite unabhängige Kommunikationsverbindungen (15) enthalten, die sich zwischen zwei Kommunikationsverbindern (Ei, Fi) des Moduls (20) erstrecken,
und
dass die Energieübertragungsvorrichtung eine Kontrolleinheit enthält, die durch eine Kommunikationsverbindung mit mindestens einem Modul (20) verbunden ist, in geeigneter Weise, um Befehle an es zu übertragen und/oder Informationen zu empfangen.

9. Energieübertragungsvorrichtung nach einem der vorhergehenden Ansprüche, **dadurch gekennzeichnet, dass** sie mindestens ein Modul (20) enthält, das alle oder einen Teil enthält von:
- einer Verwaltungseinheit (17);
- mindestens einem Temperatur-, und/oder Strom- und/oder Spannungsmessfühler (26);
- einem Element (18), das eine galvanische Trennung zwischen einer Kommunikationsverbindung und dem Rest des Moduls bildet;
- einer Energieverwaltungssteuerung (19);
- einer Schaltersteuerung;
- einem Lüfter.

10. Energieübertragungsvorrichtung nach einem der vorhergehenden Ansprüche, **dadurch gekennzeichnet, dass** jeder Block jedes Moduls eine elektrische Leistungsverbindung (27) enthält, und dass diese elektrischen Leistungsverbindungen (27) aller Blöcke durch ein Verbindungsbauteil (57) verbunden sind, um eine dreiphasige sternförmige Architektur zu bilden.

11. Energieübertragungsvorrichtung nach einem der vorhergehenden Ansprüche, **dadurch gekennzeichnet, dass** sie einen Aufnahmehalter (30) enthält, der Paare von Leistungsverbindern (Si) enthält, um die von allen oder einem Teil mindestens einer Zelle (21) mindestens eines Moduls (20) übertragene Leistung zu empfangen, das elektrisch mit dem Aufnahmehalter (30) durch Paare von Verbindern (Ai) des Moduls (20) verbunden ist, die mit Leistungsverbindern (Si) des Aufnahmehalters zusammenwirken,
und dass der Aufnahmehalter (30) Ausgangsverbinder (CP) enthält, um die Energieübertragungsvorrichtung mit einer zu speisenden äußeren Vorrichtung (40) zu verbinden, und dass der Aufnahmehalter (30):
- eine Kontrolleinheit enthält, die durch eine Kommunikationsverbindung mit mindestens einem Modul (20) der Energieübertragungsvorrichtung verbunden ist, die Befehle an es übertragen und Messinformationen empfangen kann; und/oder
- mindestens einen DC/DC- oder AC/DC-Wandler (35) enthält; und/oder
- den Stapel der Module (20) der Energieübertragungsvorrichtung empfängt;
und/oder
- keine Zellen enthält.

12. Energieübertragungsvorrichtung nach einem der vorhergehenden Ansprüche, **dadurch gekennzeichnet, dass** jedes Modul (20) in einem monolithischen Format mit einer Hülle (25) vorliegt, in deren Innerem Verbinder (Ai, Bi, D1, Ti) angeordnet sind.

13. Energieübertragungsvorrichtung nach dem vorhergehenden Anspruch, **dadurch gekennzeichnet, dass** die Module (20) eine parallelepipedische Form aufweisen, die Verbinder auf ihrer ebenen Oberseite (23) und auf ihrer ebenen Unterseite (22) angeordnet enthält, was ihre senkrechte Stapelung erlaubt.

14. Energieübertragungsvorrichtung nach einem der vorhergehenden Ansprüche, **dadurch gekennzeichnet, dass** die Module (20) Verbinder (60) enthalten, die mit elektrischen Verbindungen (61) verbunden sind, die es ermöglichen, eine Erfassungsschaltung (62) zu bilden, die die Erfassung der richtigen oder nicht richtigen Montage der Energieübertragungsvorrichtung erlaubt.

15. Energieübertragungsvorrichtung nach einem der vorhergehenden Ansprüche, **dadurch gekennzeichnet, dass** sie eine Verschlusskappe (50) enthält, die mindestens ein Verbindungsbauteil (57) in Form einer elektrischen Leistungsverbindung enthält, die zwei Leistungsverbinder (Ci) verbindet, wobei die Verschlusskappe (50) elektrisch mit einem Modul (20) durch Verbinder (Bi) des Moduls verbunden ist, die mit Verbindern (Ci) der Verschlusskappe (50) zusammenwirken, so dass die elektrische Leistungsverbindung der Verschlusskappe (50) einen Leistungspfad zwischen zwei elektrischen Leistungsverbindungen (27) des Moduls (20) schließt.

16. Verfahren zur Montage einer Energieübertragungsvorrichtung, insbesondere einer Batterie, **dadurch gekennzeichnet, dass** es einen Schritt der Bestimmung der Anzahl von Modulen (20), die abhängig von einer vorbestimmten Nutzung notwendig sind, dann die Verbindung der notwendigen Module (20) miteinander in Form einer Kette von Modulen enthält, um eine Energieübertragungsvorrichtung nach einem der Ansprüche 1 bis 15 zu bilden.

17. Verfahren zur Verwaltung einer Energieübertragungsvorrichtung, insbesondere einer Batterie, nach einem der Ansprüche 1 bis 15, **dadurch gekennzeichnet, dass** es einen Schritt der Echtzeit- oder Fast-Echtzeitanpassung der Spannung der Energieübertragungsvorrichtung durch die Verbindung oder Trennung von Modulen und/oder Zellen durch mindestens eine Verwaltungseinheit enthält, insbesondere, um einen dreiphasigen Ausgang im Bereich der Ausgangsverbinder der Energieübertragungsvorrichtung zu erhalten.

## Claims

1. Energy transmission device, notably a battery or energy generating device, **characterized in that** it comprises:
- at least one module (20) arranged within a casing (25), comprising a plurality of independent electrical power links (27, 29) and a plurality of blocks, each comprising:
- at least one first electrical power link (27) connected to a pair of connectors (A1, B1), and
- a plurality of cells (21) electrically connected to this first electrical power link (27), allowing these cells (21) to be connected to components that are external to the module (20) by means of the pair of connectors (A1, B1), and
- the pair of connectors (A1, B1), which is arranged on the casing (25) of the module, so as to be capable of electrical connection to an electrical connector of a second module that would comprise a same pair of connectors,
- switches (24) that are capable of modifying the electrical link between a plurality of cells (21) of the block, notably allowing connection of two cells (21) in series or shunting of one or more cell(s) (21), in order to be able to vary the voltage between the pair of connectors (A1, B1),
- a connection component (57) allowing electrical connection of a plurality of independent electrical power links (27, 29) of the at least one module (20),
- a plurality of output connectors (A1, A2 ; A1 ; CP) allowing polyphase, notably three-phase, electrical linking of the energy transmission device to an outer component, each output connector being electrically connected to at least one electrical power link (27, 29) of a block of one or more modules (20) of the energy transmission device.

2. Energy transmission device according to the preceding claim, **characterized in that** it comprises at least one management unit (17) that controls the opening and closing of switches (24) arranged within a module (20) in order to obtain a variable signal on each phase of the energy transmission device.

3. Energy transmission device according to the preceding claim, **characterized in that** the management unit(s) generate(s) an AC signal on each phase of the energy transmission device.

4. Energy transmission device according to Claim 2 or 3, **characterized in that** it comprises a management unit (17) in each module (20) that controls the switches (24) of the module (20).

5. Energy transmission device according to one of the preceding claims, **characterized in that** it comprises:
- a module (20) comprising a block comprising at least one first electrical power link (27) and at least one second electrical power link (29) that are independent and respectively connected to two pairs of separate connectors (A1, B1), (A2, B2), which pairs are arranged on the casing (25) of the module, allowing connection of the cells (21) of the block to components that are external to the module (20), the two pairs of connectors (A1, B1), (A2, B2) being arranged on the casing (25) so that one pair of connectors (A2, B2) is capable of electrical connection to the first pair (A1, B1) of another, similar module (20),
- a connection component allowing connection of the two electrical power links (27, 29) of each block of each module (20),
- a plurality of pairs of connectors (A1, A2 ; CP) allowing polyphase electrical linking to an outer component, each pair of connectors (A1, A2) being connected to the power links (27, 29) of a block of one or more modules (20) of the energy transmission device.

6. Energy transmission device according to one of the preceding claims, **characterized in that** it comprises at least one module (20) comprising at least one second electrical power link (29) extending between second connectors (A2, B2) of the module (20) in the form of a simple electrical power link that is independent of any cell (21) of the module (20).

7. Energy transmission device according to one of the preceding claims, **characterized in that** it comprises at least one module (20) having a communication link (28; 14, 15) and communication connectors (Ei, Fi; D1) in order to allow communication exchanges with an entity outside the module (20).

8. Energy transmission device according to the preceding claim, **characterized in that**:
- all the modules (20) comprise a communication link (28) connected to that of its neighbours in order to form a communication bus passing through all the modules (20) of the energy transmission device,
or
- all the modules (20) comprise a communication link (14) connected to a communication connector (D1) of the module and second independent communication links (15) extending between two communication connectors (Ei, Fi) of the module (20),
and
**in that** the energy transmission device comprises a control unit connected by a communication link to at least one module (20), in a manner capable of transmitting orders thereto and/or of receiving information.

9. Energy transmission device according to one of the preceding claims, **characterized in that** it comprises at least one module (20) that comprises all or some of:
- a management unit (17);
- at least one measurement sensor (26) for temperature, and/or for current and/or for voltage;
- an element (18) forming DC isolation between a communication link and the rest of the module;
- an energy management driver (19);
- a switch driver;
- a fan.

10. Energy transmission device according to one of the preceding claims, **characterized in that** each block of each module comprises an electrical power link (27), and **in that** these electrical power links (27) of all the blocks are connected by a connection component (57) in order to form a three-phase star architecture.

11. Energy transmission device according to one of the preceding claims, **characterized in that** it comprises a host support (30), comprising pairs of power connectors (Si) in order to receive the power transmitted by all or some of at least one cell (21) of at least one module (20) electrically connected to the host support (30) by pairs of connectors (Ai) of the module (20) cooperating with power connectors (Si) of the host support, and **in that** the host support (30) comprises output connectors (CP) in order to connect the energy transmission device to an external device (40) that is to be supplied with power,
and **in that** the host support (30):
- comprises a control unit connected by a communication link to at least one module (20) of the energy transmission device, which is capable of transmitting orders thereto and of receiving measurement information;
and/or
- comprises at least one DC/DC or AC/DC converter (35); and/or
- receives the stack of modules (20) of the energy transmission device; and/or
- does not comprise any cells.

12. Energy transmission device according to one of the preceding claims, **characterized in that** each module (20) is in a monolithic format with a casing (25) within which connectors (Ai, Bi, D1, Ti) are arranged.

13. Energy transmission device according to the preceding claim, **characterized in that** the modules (20) have a parallelepipedal form, comprising connectors arranged on their flat upper surface (23) and on their flat lower surface (22), allowing them to be stacked vertically.

14. Energy transmission device according to one of the preceding claims, **characterized in that** the modules (20) comprise connectors (60) linked to electrical links (61) allowing the formation of a detection circuit (62) allowing detection of correct or incorrect assembly of the energy transmission device.

15. Energy transmission device according to one of the preceding claims, **characterized in that** it comprises a closure cap (50) comprising at least one connection component (57) in the form of an electrical power link connecting two power connectors (Ci), the closure cap (50) being electrically connected to a module (20) by connectors (Bi) of the module cooperating with connectors (Ci) of the closure cap (50), so that the electrical power link of the closure cap (50) completes a power path between two electrical power links (27) of said module (20).

16. Method for assembling an energy transmission device, notably a battery, **characterized in that** it comprises a step of determination of the number of modules (20) that are necessary according to a predetermined use, and then connection of the necessary modules (20) to one another in the form of a chain of modules, in order to form an energy transmission device according to one of Claims 1 to 15.

17. Method for managing an energy transmission device, notably a battery, according to one of Claims 1 to 15, **characterized in that** it comprises a step of real-time or quasi-real-time adaptation of the voltage of the energy transmission device, by means of the connection or disconnection of modules and/or cells by at least one management unit, notably in order to obtain a three-phase output at the output connectors of the energy transmission device.
